# EUROPEAN PATENT SPECIFICATION

(11) **EP 4 432 971 B1**
(45) Date of publication and mention of the grant of the patent: **10.09.2025**
(21) Application number: 22817122.9
(22) Date of filing: 08.11.2022
(51) Int. Cl.: A61C 17/32, A61C 17/34

(54) **SYNCHRONIZATION AND DE-SYNCHRONIZATION OF SWEEPING AND POWER TAPPING MOTIONS**
SYNCHRONISATION UND DESYNCHRONISATION VON ABTAST- UND LEISTUNGSERFASSUNGSBEWEGUNGEN
SYNCHRONISATION ET DÉSYNCHRONISATION DE MOUVEMENTS DE BALAYAGE ET DE PRISE D'ÉNERGIE

(30) Priority: 20.11.2021 US 202163281655 P
(43) Date of publication of application: 25.09.2024
(73) Proprietor: Koninklijke Philips N.V., 5656 AG Eindhoven (NL)
(72) Inventor: ADRIAENSEN, Guido Antonius Theodorus, 5656 AG Eindhoven (NL); DENGLER, Evan Dak Wah, 5656 AG Eindhoven (NL); BRANDÃO SILVA, Priscilla, 5656 AG Eindhoven (NL); LEE, Sungsoo, 5656 AG Eindhoven (NL); MILLER, Kevin Arnold, 5656AG Eindhoven (NL); WILLIAMS, Kayleigh Karina, 5656AG Eindhoven (NL); GERHARDT, Lutz Christian, 5656AG Eindhoven (NL)
(74) Representative: Philips Intellectual Property & Standards
(86) International application number: PCT/EP2022/081052
(87) International publication number: WO 2023/088721

(56) References cited:
- US-A1- 2008 313 828
- US-A1- 2010 132 139

## Description

### Field of the Disclosure

The present disclosure is directed generally to personal care devices and systems for synchronizing and de-synchronizing controllable sweeping and power tapping motions to achieve high performance cleaning results.

### Background

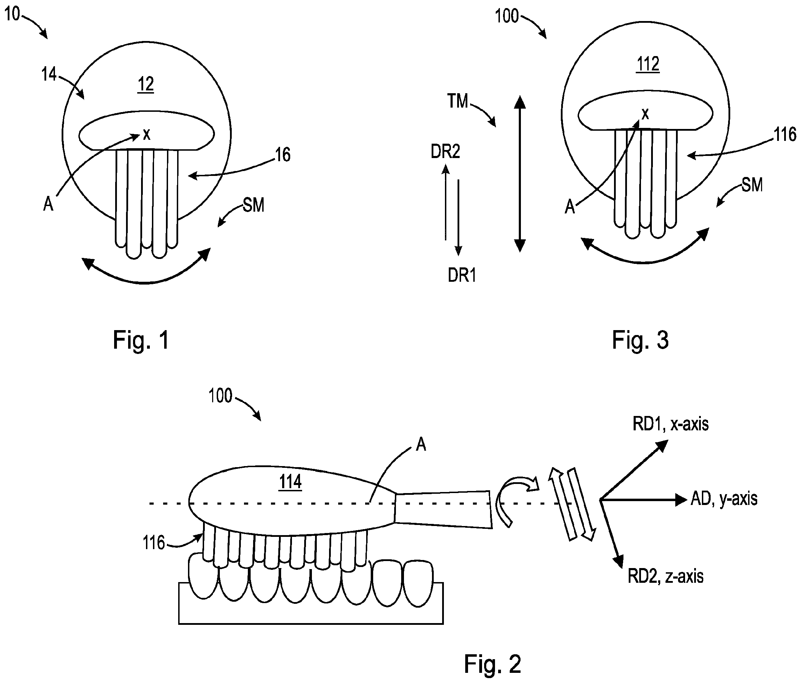

Current modern powered personal care devices use rotary motion about a central axis of the cleaning element platen. This motion is known as a sweeping motion. A simplified schematic representation of a modern powered personal care device is shown in FIG. 1. As shown in FIG. 1, powered device 10 has a handle 12 and a cleaning unit 14 or brush head. Cleaning elements 16 or bristles are shown extending from cleaning unit 14. In use, cleaning unit 14 is driven by a drive system contained within handle 12. The cleaning elements are typically rotated by the drive system about central axis A in a sweeping motion SM. The sweeping motion is typically embodied as movement that is linear, rotational, or a combination of both linear and rotational and the movement is tangential to the direction that the bristles are facing.

Unfortunately, toothbrush devices that employ the sweeping motion alone are not optimized for all target areas in the mouth (e.g., interproximal areas, gumline areas, incisor surfaces, molar surfaces, and overall surface areas of the teeth). Achieving proper cleaning performance at all target areas depends on a number of factors, including toothbrush layout, motion of the toothbrush, and user handling. Although manufacturers can control toothbrush layout or design, it is challenging to design a toothbrush that performs optimally at all target areas due to conflicting requirements for the different areas. Consequently, toothbrushes can have non-optimal performance at certain areas of interest. Although consumers could ideally use different types of toothbrushes to achieve the best cleaning in all the target areas, consumers only employ a single toothbrush device for daily oral care routines.

Thus, there is a need in the art for improved electric personal care devices and systems that achieve stain and/or plaque removal and gum health objectives. There is also a need in the art for improved personal care devices and systems that synchronize and/or de-synchronize different drivetrain motions to target specific areas of the mouth or all target areas while becoming less dependent on user handling.

US 2008/313828 A1 describes a toothbrush which includes a handle portion and a brushhead assembly which comprises a head portion and a stem portion. The head portion includes a bellows-like acoustic action member for creating acoustic wave action.

US 2010/132139 A1 describes a toothbrush drive which includes a first drive component for generating a magnetic field and a second drive component driven in both a translational and rotational manner.

### Summary of the Disclosure

The present disclosure is directed generally to inventive electric or powered personal care devices, such as, an electric toothbrush or shaver, and methods for producing high performance cleansing results using the electric or powered personal care devices. The inventive systems achieve improved stain and/or plaque removal and gum health objectives by precisely and controllably generating a power tapping motion in combination with a sweeping motion. Various embodiments and implementations herein are directed to improved systems comprising a cleaning unit having a set of cleaning elements, e.g., bristles, and one of a variety of drivetrain assemblies. The improved drivetrain assemblies generate (i) first periodic movement such that the cleaning elements move in a first direction about a central axis of the device or along a line that is tangential to the cleaning unit platen; and (ii) second periodic movement such that the cleaning elements move in a second direction that is normal or perpendicular to the cleaning unit platen. In embodiments where the first periodic movement involves rotating the cleaning elements about a central rotation axis of the personal care device, the second direction is perpendicular to the central rotation axis of the first periodic movement. Applicant has recognized and appreciated that electric or powered personal care devices can be significantly improved upon by controllably moving the cleaning elements in a first direction that is perpendicular to the axis of alignment of the cleaning elements (i.e., a sweeping motion) and controllably driving the cleaning elements in a second direction that is parallel to the axis of alignment of the cleaning elements (i.e., a tapping motion), where the movement is within a particular range of critical amplitudes and frequencies, and where the sweeping and tapping motions are operated at different frequencies and/or out-of-phase with each other.

In one aspect, a personal care device according to the invention is provided according to claim 1.

According to an embodiment, the second frequency is approximately three times lower than the first frequency.

According to an embodiment, the second frequency is approximately two times higher than the first frequency.

According to an embodiment, the first and second periodic movements are phase shifted from each other by approximately 90 degrees or approximately 270 degrees. The phase shift can be in the range of approximately 45-135 degrees or in the range of approximately 225-315 degrees.

According to an embodiment, the first and second periodic movements are phase shifted from each other by approximately 180 degrees. The phase shift can be in the range of approximately 135-225 degrees.

In another aspect, a personal care device according to the invention is provided according to claim 6.

According to an embodiment, the second direction is parallel to an axis of alignment of the cleaning elements.

According to an embodiment, the first and second periodic movements are phase shifted from each other by approximately 90 degrees, approximately 180 degrees, or approximately 270 degrees.

According to an embodiment, the motion generator comprises: a motion conversion element coupled with the drivetrain; and a tapping plate configured to be activated by moving the drivetrain, wherein the tapping plate is configured to move the set of cleaning elements in the second periodic movement.

According to an embodiment, the drivetrain comprises a first actuator and the motion generator comprises a second actuator configured to move the set of cleaning elements in the second periodic movement.

According to an embodiment, further comprising: a controller configured to control the actuation assembly, wherein the controller is configured to: receive an input signal from the first actuator; and control the second actuator based on the received input signal from the first actuator.

According to an embodiment, the controller is configured to generate a frequency and phase difference of the second periodic movement relative to the first periodic movement based on the received input signal.

In various implementations, a processor or controller may be associated with one or more storage media (generically referred to herein as "memory," e.g., volatile, and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a simplified schematic representation of an end view of a modern powered personal care device employing a sweeping motion.
FIG. 2 is a simplified schematic representation of a portion of a powered personal care device, according to aspects of the present disclosure.
FIG. 3 is a simplified schematic representation of an end view of a powered personal care device configured to employ sweeping and tapping motions, according to aspects of the present disclosure.
FIG. 4 is a schematic representation of a powered personal care device, according to aspects of the present disclosure.
FIG. 5 is a graphical representation of the tapping motion coupled with the sweeping motion in phase and at double the frequency, according to aspects of the present disclosure.
FIG. 6 is a schematic representation of an end view of a powered personal care device moving according to one full cycle of a summation of the tapping and sweeping motions depicted in FIG. 5, according to aspects of the present disclosure.
FIG. 7 is a graphical representation of the tapping motion coupled and approximately 90 degrees out-of-phase with the sweeping motion, according to aspects of the present disclosure.
FIG. 8 is a schematic representation of an end view of a powered personal care device moving according to one full cycle of a summation of the tapping and sweeping motions depicted in FIG. 7, according to aspects of the present disclosure.
FIG. 9 is a graphical representation of the tapping motion coupled and approximately 180 degrees out-of-phase with the sweeping motion, according to aspects of the present disclosure.
FIG. 10 is a schematic representation of an end view of a powered personal care device moving according to one full cycle of a summation of the tapping and sweeping motions depicted in FIG. 9, according to aspects of the present disclosure.
FIG. 11 shows a graphical representation of example sweeping and tapping amplitudes when the motions are approximately 180 degrees out-of-phase, according to aspects of the present disclosure.
FIG. 12 shows a graphical representation of example sweeping and tapping amplitudes when the cleaning elements are driven to produce two taps during a single sweeping cycle, according to aspects of the present disclosure.
FIG. 13 shows a graphical representation of example sweeping and tapping amplitudes when the cleaning elements are driven to produce four taps during a single sweeping cycle, according to aspects of the present disclosure.
FIG. 14 is a graphical representation of the tapping motion coupled and approximately 90 degrees out-of-phase with the sweeping motion where the motions have equal amplitudes and the frequency ratio of the sweeping to tapping motions is 3:1, according to aspects of the present disclosure.
FIG. 15 is a graphical representation of the tapping motion coupled with the sweeping motion in phase and at double the frequency, according to aspects of the present disclosure.
FIG. 16 is a schematic representation of an end view of a powered personal care device moving according to one full cycle of a summation of the tapping and sweeping motions depicted in FIG. 15, according to aspects of the present disclosure.
FIG. 17 is a graphical representation of the tapping motion coupled with the sweeping motion in phase and at double the frequency, according to aspects of the present disclosure.
FIG. 18 is a schematic representation of an end view of a powered personal care device moving according to one full cycle of a summation of the tapping and sweeping motions depicted in FIG. 17, according to aspects of the present disclosure.
FIG. 19 is a simplified schematic representation of a powered personal care device with a single mechanical actuation system for driving a cleaning element to carry out tapping and sweeping motions, according to aspects of the present disclosure.
FIG. 20 is a schematic representation of an example mechanical actuation system for driving a cleaning element of a cleaning device to carry out tapping and sweeping motions, according to aspects of the present disclosure.
FIG. 21 is a schematic representation of the example mechanical actuation system of FIG. 21 as a coupling element rotates with a drivetrain shaft, according to aspects of the present disclosure.
FIG. 22 is a simplified schematic representation of a powered personal care device with a mechanical actuation system having two actuators for driving a cleaning element to carry out tapping and sweeping motions, according to aspects of the present disclosure.
FIG. 23 is a simplified schematic representation of a powered personal care device with a mechanical actuation system having two actuators for driving a cleaning element to carry out tapping and sweeping motions, according to aspects of the present disclosure.
FIG. 24 is a flowchart illustrating a method of operating a powered personal care device, according to aspects of the present disclosure.

### Detailed Description of Embodiments

The present disclosure describes various embodiments of improved systems for driving cleaning units of electric or powered personal care devices, such as, electric oral care devices or shavers and the like. Applicant has recognized and appreciated that personal care devices can provide improved cleansing performance at critical areas of a user's mouth by driving the cleaning elements in a sweeping motion in combination with a controllable vertical periodic motion that is parallel to the direction of the cleaning elements or an axis of alignment of the cleaning elements, where the amplitude of the vertical motion is greater than 0.25 mm (referred to herein as "power tapping"). As used herein, the term "vertical" does not mean an absolute direction with respect to the ground, but instead is used to indicate a relative direction of movement illustrated in the Figures. As described herein, the inventive power tapping motion within powered personal care devices can: (i) achieve deeper reach in gum pockets to remove subgingival plaque, (ii) achieve higher peak forces at surfaces which improve plaque and/or stain removal, (iii) prevent pinning of bristle tufts which improves plaque removal by restoring beneficial tuft sweeping behavior, (iv) achieve more resilience to variables of use like toothbrush placement, toothbrush angle, and toothbrush pressure, and (v) provide new options for experiential modes for the consumer. Accordingly, exemplary improved systems described or otherwise envisioned herein provide a cleaning unit having a set of cleaning elements, a controller, and one of a variety of actuation assemblies to generate dual periodic movements. Applicant has recognized and appreciated that such controlled periodic movements can be operated at different frequencies and/or out-of-phase with each other to provide improved cleaning performance.

A particular goal of utilization of the embodiments and implementations herein is to provide a mechanism to provide a power tapping motion in a powered personal care device like, e.g., a Philips Sonicare^{™} electric toothbrush (manufactured by Koninklijke Philips N.V.). However, the components of the device may be utilized with many other personal care devices, including oral care devices, oral cleaning devices, mouthpieces, flossers, skin cleaners, and many other devices. This disclosure should not be limited by the specific embodiments depicted and described.

As shown in FIG. 2, a simplified schematic representation of a portion of personal care device 100 configured to generate a sweeping motion and a tapping motion is provided. Personal care device 100 comprises brush head 114 which can be driven to rotate cleaning elements 116 about central axis A. The directions shown in FIG. 2 are included to demonstrate the spatial terminology used in the art and the present application. As used herein, the term "vertical" means the direction indicated. Axial direction AD is parallel to central axis A and extends along a y-axis of the personal care device 100. Radial direction RD1 is orthogonal to central axis A and radial direction RD2 and extends along an x-axis of the personal care device 100. Radial direction RD2 is orthogonal to both axial direction AD and radial direction RD1, parallel to the axes of the cleaning elements 116 depicted, and extends along a z-axis of the personal care device 100. The power tapping motion described herein refers to controllable movement of the cleaning unit and/or cleaning elements in radial direction RD2. In embodiments, the power tapping motion refers to controllable movement of the cleaning unit and/or cleaning elements in radial direction RD2 by rotating the drivetrain shaft about an axis extending in radial direction RD1 (i.e., about an x-axis of the device). In other words, the power tapping motion refers to motion of the cleaning elements that is parallel to an axis of alignment of the cleaning elements. The sweeping motion refers to rotary and/or linear motion of the cleaning elements that is perpendicular to the axis of alignment of the cleaning elements.

Referring to FIG. 3, a schematic representation of an end view of personal care device 100 is provided. Personal care device 100 is configured to generate a variety of motions, each motion comprising a summation (i.e., a cumulative act, motion, or effect) of sweeps or strokes and pulses or taps. The sweeps or strokes are directed in direction SM, (which would be in a direction between occlusal surfaces, i.e., biting surfaces, and the gumline when the toothbrush is held with bristle tips pointing toward a buccal side of the teeth). The pulses or taps are directed in the vertical direction TM (which would be a lingual to facial direction when the toothbrush is held with the bristle tips pointing toward a buccal side of the teeth). In embodiments, the toothbrush is held with the bristle tips pointing toward the teeth at a 45 degree angle. As used herein, the tapping motion is defined as vertical periodic movement (i.e., direction TM) that is equal to or greater than 0.25 mm in amplitude. As discussed in greater detail herein, the oral care device 100 can be configured to turn on and off the sweeping and tapping motions (SM and TM) for optimizing motion to a specific region that a particular motion is most beneficial for. In some cases, the particular motion comprises either the sweeping motion alone or the tapping motion alone. In other cases, the particular motion comprises some combination of the sweeping motion and the tapping motion. For example, in embodiments, the tapping motion alone can be used for the lower lingual anterior region of the mouth. A small power tapping motion (i.e., a tapping motion with an amplitude on the smaller side of the critical range described herein) can be used with the sweeping motion for the buccal anterior region of the mouth. Alternatively, the sweeping motion alone can be used for the buccal anterior region of the mouth. A large power tapping motion (i.e., a tapping motion with higher amplitudes of the critical range described herein) can achieve better reach at interproximal regions in-between teeth with or without the sweeping motion.

In embodiments, the desired range of amplitudes for the power tapping motion is from around ±0.25 mm to around ±3 mm, where the power tapping motion generally comprises a periodic vertical motion equal to or greater than 0.5 mm. Amplitudes that are higher than ±3 mm are not desired due to a risk of tooth chatter, where the platen of the personal care device can impact the occlusal surfaces of the opposing jaw. Additionally, amplitudes that are higher than ±3 mm can cause undesired vibration of oral and nasal tissues, as well as an unpleasant sensation on the treated surfaces. Frequencies that are lower than 0.25 Hz would be too slow to be efficacious. Frequencies that are higher than 520 Hz would be over double the primary resonant frequency and are not desirable. The term frequency refers to a number of cycles for a given time interval, e.g., a second. The term amplitude refers to a peak amplitude which can comprise a maximum absolute value of a signal as used herein.

It should be appreciated that a recommended oral care routine lasts for 2 minutes and, when considering an average of 32 teeth, there is approximately 3.75 seconds per tooth available during the recommended oral care routine. Thus, if the incidence of the power tapping motion is slower than 4 seconds, then it is too slow to be applied uniformly throughout the mouth (i.e., at every interproximal spot). Accordingly, in preferred embodiments, the incidence of the power tapping motion occurs at least every 3.75 seconds (i.e., a frequency of approximately 0.27 Hz). **In** embodiments, the minimal frequency may be approximately 2 Hz (i.e., at least every 0.5 seconds). In further embodiments, in order for a user to experience the power tapping motion uniformly throughout the mouth (i.e., at every interproximal spot and/or at each tooth), the power tapping motion can occur multiple times during each pass over a single tooth. Thus, the requisite frequency would be approximately 20 Hz (i.e., at least every 0.05 seconds). Of course, if an oral care routine is shorter than or longer than 2 minutes, it should be appreciated that the incidence of the power tapping motion may be adjusted accordingly so that the incidence of the power tapping motion occurs uniformly throughout the oral care routine. **In** other embodiments, it should be appreciated that it may be desired to have the incidence of the power tapping motion occur inconsistently or nonuniformly due to an analysis of particular areas where the tapping motion is more beneficial than other areas, for example.

In example embodiments, the sweeping motion is combined with the tapping motion having an amplitude of 0.25 mm and, the addition of the tapping motion can generate a 1% improvement in the gumline areas, a 3% improvement in the interdental areas, and a 1% overall improvement in cleaning performance considering coverage of all surfaces to be cleaned.

The tapping motion improves the performance of the sweeping motion by untrapping or unpinning the bristle tufts. Bristle trapping or pinning is a phenomena where, under heavy loads, the bristles can become constrained or trapped such that they no longer freely move according to the sweeping motion delivered by the drivetrain. When the user applies too much load when brushing, the bristle tufts can become partially constrained in their movement on the surface of the teeth. As a result of the constraint, the sweeping motion is reduced and the cleaning performance can suffer. When the user applies even more load, the bristle tufts can become trapped or pinned where the tufts do not move at all when brushing. As a result of the trapped or pinned bristles, there is no sweeping motion and the user derives no benefit from the sweeping motion from the drivetrain assembly. When bristles are constrained or trapped, the cleaning benefits only resume when the user manually moves the product to a new orientation and frees the bristles from the heavy loads.

The sweeping motion performs best when the bristles touch the surface of the tooth and can move freely along large surface areas without being constrained. When brushing with sweeping and tapping motions together, the bristle tufts splay out as the load increases or as the brush head moves in direction DR1 due to the drivetrain assembly generating the vertical up-down movement (i.e., the power tapping motion). As the load increases due to the force exerted from the drivetrain assembly or otherwise due to user applied load for example, the tufts can become more and more constrained. However, if the amplitude of the brush head movement in direction DR1 is large enough, the large amplitude movement can cause buckling of a constrained or trapped bristle and effectively release or unload the bristle. Thus, the addition of the tapping motion of a sufficiently large amplitude to the sweeping motion allows the bristles to move with more freedom, thereby improving cleaning performance.

Critically, when the brush head moves in direction DR2 during the periodic tapping motion, the behavior reverses and as the load decreases further, the tufts become less and less constrained. The tapping motion can allow the tufts to cover a larger surface area during the sweeping motion and improves plaque removal by restoring the beneficial sweeping motion.

The addition of the tapping motion to the sweeping motion also achieves a deeper reach into gum pockets to remove subgingival plaque. Within gum pockets, the addition of the tapping motion achieves improved cleaning performance on marginal areas, interproximal areas, mesial areas, and buccal areas, and an improved overall cleaning performance. In example embodiments, the deeper reach and improved cleaning performance is achieved under a 30 degree roll angle, a 45 degree roll angle, or a 60 degree roll angle, or any suitable roll angle. Thus, the addition of the tapping motion renders the cleaning efficiency of the brush to be more robust to user orientation, and less dependent on the user's technique, than using the sweeping motion alone.

The improved cleaning performance can be achieved by using the critical operating parameters for the tapping motion discussed herein. While a variety of drivetrain assemblies can be implemented to generate the tapping motion, we will discuss two exemplary assemblies below merely to illustrate how the invention can be implemented and practiced when phase shifting or frequency shifting the sweeping and tapping movements.

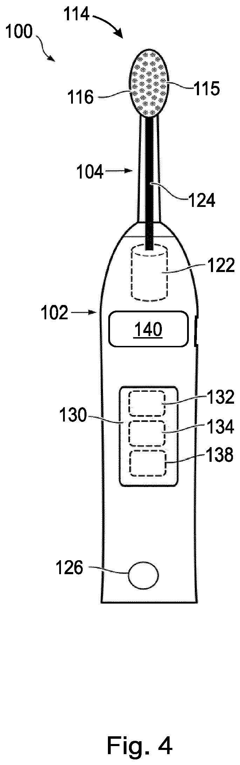

Referring to FIG. 4, an example personal care device 100 including a body portion 102 with a housing and a cleaning unit 104 mounted on the body portion 102 is provided. Cleaning unit 104 includes at its end remote from the body portion 102 brush head 114. Brush head 114 includes bristle face 115, which provides a plurality of cleaning elements 116, e.g., bristles. According to an embodiment, the cleaning elements extend along an axis of alignment or an axis substantially perpendicular to the unit's axis of elongation, although many other embodiments of the cleaning unit and cleaning elements are possible.

Cleaning unit 104, brush head 114, and/or bristle face 115 are mounted so as to be able to move relative to the body portion housing 102. The movement can be any of a variety of different movements, including vibrations or rotation, among others. According to one embodiment, cleaning unit 104 is mounted to the body 102 so as to be able to vibrate relative to body portion housing 102, or, as another example, brush head 114 is mounted to cleaning unit 104 so as to be able to vibrate relative to body portion housing 102, or, as another example, bristle face 115 is mounted to cleaning unit 104 so as to be able to vibrate relative to body portion housing 102. The cleaning unit 104 can be fixedly mounted onto body portion housing 102, or it may alternatively be detachably mounted so that cleaning unit 104 can be replaced with a new one when the cleaning elements or another component of the device are worn out and require replacement.

The body portion includes a drivetrain assembly 122 with an actuator or motor for generating movement and a transmission component 124, or shaft, for transmitting the generated movements to cleaning unit 104. For example, drivetrain assembly 122 comprises a motor or electromagnet(s) that generates movement of drivetrain shaft 124, which is subsequently transmitted to the cleaning unit 104. Drivetrain and motor 122 can include components such as a power supply, an oscillator, and one or more electromagnets, among other components. In this embodiment the power supply comprises one or more rechargeable batteries, not shown, which can, for example, be electrically charged in a charging holder in which personal care device 100 is placed when not in use.

The body portion is further provided with a user input 126 to activate and de-activate movement generator or drivetrain assembly 122. The user input 126 allows a user to operate the personal care device 100, for example to turn the personal care device 100 on and off. The user input 126 may, for example, be a button, touch screen, or switch.

The body portion of the device also comprises a controller 130. Controller 130 may be formed of one or multiple modules, and is configured to operate the personal care device 100 in response to an input, such as input obtained via user input 126 or an input from one or more sensors within the device. Controller 130 can comprise, for example, a processor 132 and a memory 134, and can optionally include a connectivity module 138. The processor 132 may take any suitable form, including but not limited to a microcontroller, multiple microcontrollers, circuitry, a single processor, or plural processors. The memory 134 can take any suitable form, including a non-volatile memory and/or RAM. The non-volatile memory may include read only memory (ROM), a hard disk drive (HDD), or a solid state drive (SSD). The memory can store, among other things, an operating system as well as sensor data from sensor(s). The RAM is used by the processor for the temporary storage of data. According to an embodiment, an operating system may contain code which, when executed by controller 130, controls operation of the hardware components of oral care device 100. According to an embodiment, connectivity module 138 transmits collected sensor data, and can be any module, device, or means capable of transmitting a wired or wireless signal, including but not limited to a Wi-Fi, Bluetooth, near field communication, and/or cellular module.

In embodiments, the body portion of the device also comprises one or more sensors 140. While the sensor(s) are shown within body portion 102, the one or more sensors may be located anywhere within the device, including for example within cleaning unit 104 or head member 114. According to embodiments, sensor(s) can be integral with controller 130. In embodiments, sensor 140 is configured to generate information indicative of the acceleration and/or angular orientation of personal care device 100 relative to the user's teeth. Sensor 140 can comprise an inertial motion sensor such as an accelerometer, gyroscope, or magnetic sensor. According to an embodiment, sensor 140 is configured to provide readings of six axes of relative motion (three axes translation and three axes rotation), using for example a 3-axis gyroscope and a 3-axis accelerometer. As another example, sensor 140 is configured to provide the readings of nine axes of relative motion using, for example, a 3-axis gyroscope, a 3-axis accelerometer, and a 3-axis magnetometer. Other sensors may be utilized alone or in conjunction with these sensors, including but not limited to a pressure sensor and other types of sensors, such as a capacitive sensor, a camera, a photocell, a clock, a timer, and other types of sensors. Many different types of sensors could be utilized, as described or otherwise envisioned herein. Sensor 140 can comprise two or more sensors that function together as a 6-axis or 9-axis spatial sensor system.

The frequency of the tapping motion TM can be equal to, higher, or lower than the frequency of the sweeping motion SM. In embodiments, the frequency of the tapping motion TM is lower (preferably three times lower) than the frequency of the sweeping motion SM. In further embodiments, the frequency of the tapping motion TM is three times lower than the frequency of the sweeping motion SM and the tapping motion is approximately 90 degrees out-of-phase with the sweeping motion SM. In such embodiments, the cleaning performance is optimized in all important or critical regions of the user's mouth (i.e., gumline, interdental, and overall tooth surfaces). Particular improvements are observed in the interdental areas in embodiments when the tapping motion has a lower frequency than the sweeping motion and the tapping motion is out-of-phase with the sweeping motion as described herein. Improvements are also observed in the cleaning performance of the overall tooth surfaces (i) when the tapping motion has a lower frequency than the sweeping motion and the tapping motion is out-of-phase with the sweeping motion, (ii) when the tapping motion has a frequency equal to the sweeping motion and the tapping motion is in and out-of-phase with the sweeping motion, and (iii) when the tapping motion has a higher frequency than the sweeping motion and the tapping motion is in and out-of-phase with the tapping motion. Additionally, the cleaning performance is less dependent on user handling with respect to gumline cleaning.

When the tapping motion has a lower frequency than the sweeping motion and the tapping motion is out-of-phase with the sweeping motion as described above additional improvements are observed with respect to resultant reaction force levels. Specifically, resultant reaction force levels on the platen of the powered personal care device are reduced thereby rendering a more gentle or comfortable cleaning experience for the user. Additionally, reducing the reaction force levels means requiring less energy to drive the cleaning unit, thereby resulting in a longer battery life. The reduced reaction force levels are observed (i) when the tapping motion has a lower frequency than the sweeping motion and the tapping motion is out-of-phase with the sweeping motion and (ii) when the tapping motion has a frequency equal to the sweeping motion and the tapping motion is in and/or out-of-phase with the sweeping motion. The reduced reaction force levels are even more pronounced when the tapping motion has a higher frequency than the sweeping motion and the tapping motion is in and/or out-of-phase with the tapping motion.

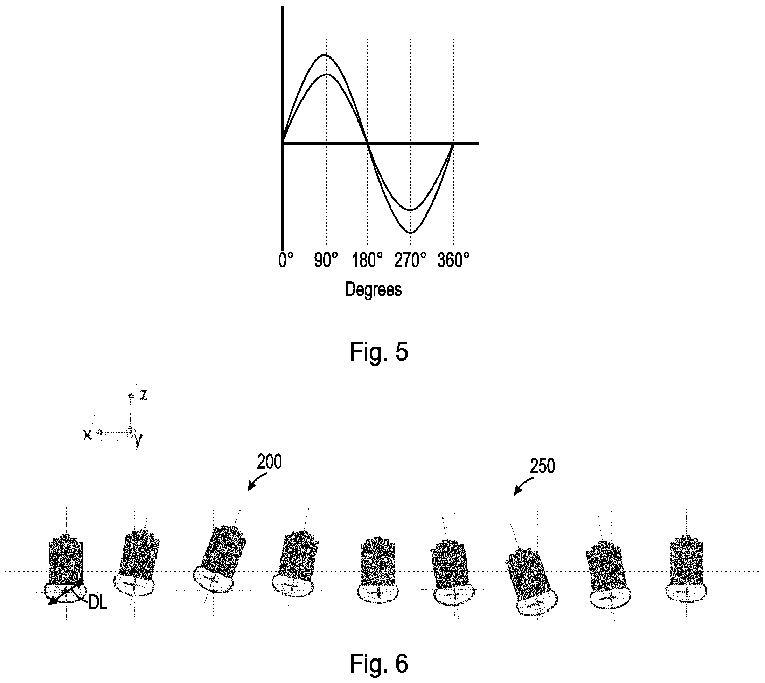

As shown in FIG. 5, when both the sweeping and tapping motions are synchronized or in phase, the waveforms of the motions move in a synchronized manner. In other words, when the sweeping and tapping motions are synchronized there is no phase angle difference between the sweeping and tapping motions. Although the amplitudes are not equal in the representations in FIG. 5, the maximum peaks and minimum peaks of both waveforms occur at the same time. A phase angle is defined as an angle difference between two periodic motions. In the particular embodiment shown in FIGS. 5 and 6, the tapping motion TM can be coupled with the sweeping motion SM in a V-shaped or "up-down" motion where the tapping motion is in-phase with the rotational motion, but at double the frequency. In such an embodiment, the combination of motions causes an asymmetric period movement. In FIG. 5, both motions begin at the same time and hit their respective maximum peak points at 90 degrees from the beginning. Both motions are also synchronized at 180 degrees from the beginning and hit their respective minimum peak points at 270 degrees from the beginning. Lastly, both motions are synchronized at 360 degrees from the beginning. The cycle of each of the respective motions is represented between 0 and 360 degrees. FIG. 6 shows an end view of a cleaning unit moving in the V-shaped or "up-down" motion over time relative to the x, y, and z-axes of the device. Due to the example sweeping motion depicted, the brush head starts out facing in a substantially upwards vertical direction. As the motion proceeds, the brush head tilts about the y-axis of the device such that the head faces upwards and to the right. Due to the tapping motion, the brush head also moves upward in the z-axis direction as the brush head tilts about the y-axis. As shown in FIG. 6, both movements are reversed as the cycle continues. As shown in FIG. 5, the maximum tapping translation and the maximum rotational angle can occur at approximately 90 degrees of a cycle. The 90 degree point of the cycle is shown at point 200 in FIG. 6. Similarly, the minimum tapping translation and the minimum rotational angle can occur at approximately 270 degrees of a cycle. The 270 degree point of the cycle is shown at point 250 in FIG. 6. The center point of the brush head traces diagonal line DL up and to the right. In such embodiments, the motion maximizes the chances that the cleaning elements contact an oral surface.

When the orientation of the device relative to the oral geometry is known, the "up-down" motion can add valuable adaptive behavior. For example, if the user is using a powered personal care device at a sub-optimal handle rotation, this asymmetric behavior could allow the cleaning elements of the cleaning unit to always contact the desired oral geometry by "stretching" the motion to the desired location. Similarly, if the user positioned the handle to cause tooth chatter or another unwanted behavior, the device could move the cleaning unit out of the way in an effort to minimize the impact.

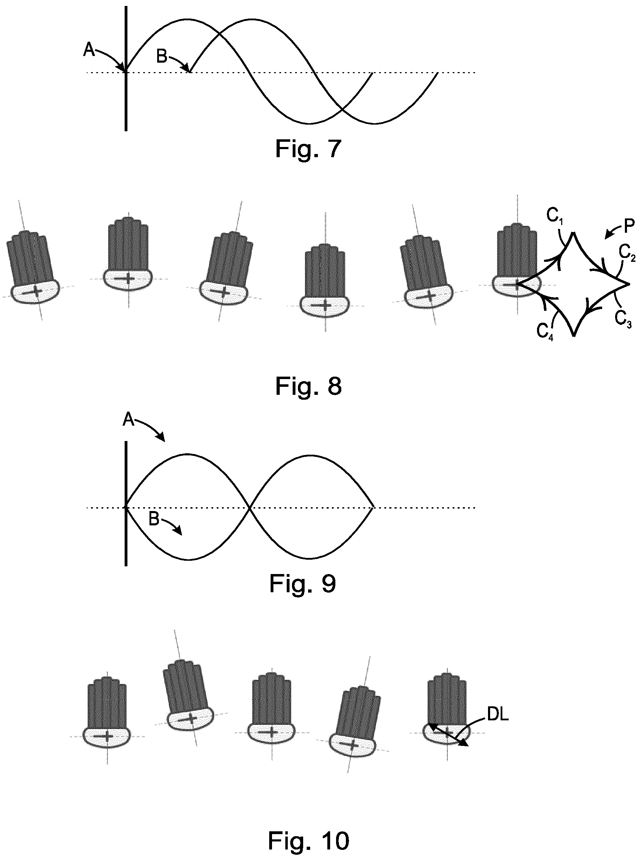

When the phase angle between the tapping and sweeping motions is approximately 90 degrees, the tapping motion TM can be ahead of the sweeping motion or, the sweeping motion SM can be ahead of the tapping motion. In FIG. 7, after the tapping motion or sweeping motion starts at point A, the other motion starts at point B, which is after approximately 90 degrees of movement of the first motion from point A. The resultant motion of the tips of the cleaning elements due to the 90 degree phase angle shift between the power tapping and sweeping motions is shown in FIG. 8. In FIG. 8, the center point of the cleaning unit traces pattern P shown at the end of the sequence. The pattern involves moving the cleaning unit along (i) a first curve C₁ up and to the right, (ii) a second curve C₂ down and to the right, (iii) a third curve C₃ down and to the left, and (iv) a fourth curve C₄ up and to the left. The cleaning unit starts and ends pattern P in the same position. The first, second, third, and fourth curves C₁, C₂, C₃, and C₄ are all connected in the embodiment depicted.

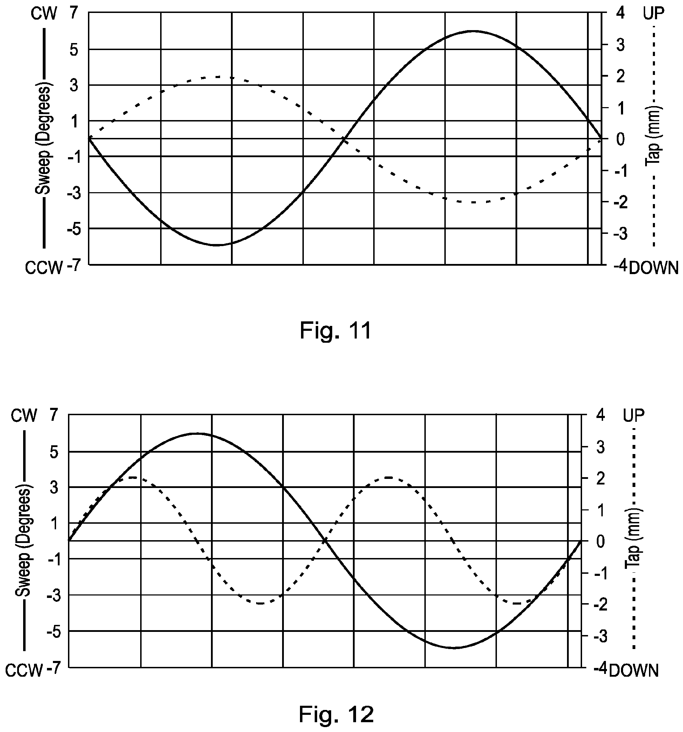

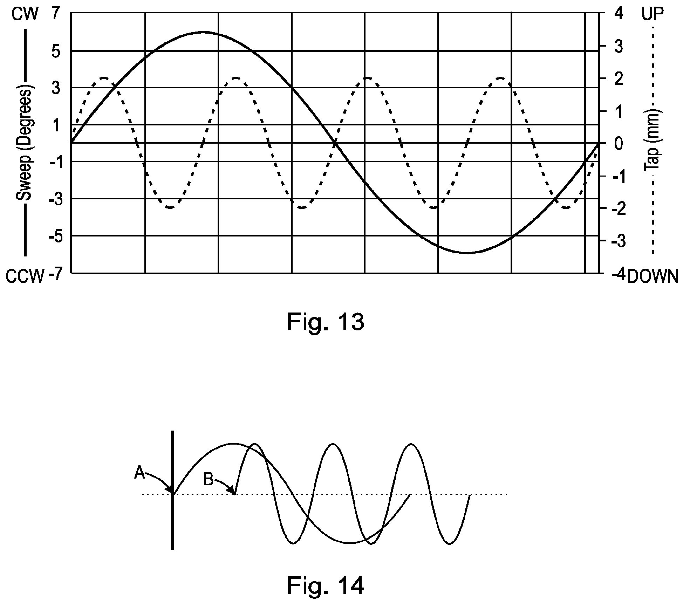

When the phase angle between the tapping and sweeping motions is approximately 180 degrees (i.e., when the phase angle difference between the motions is approximately 180 degrees), the waveforms of the tapping and sweeping motions are represented as mirror-images of each other as shown in FIG. 9. The resultant motion of the tips of the cleaning elements due to the 180 degree phase angle shift between the power tapping and sweeping motions is shown in FIG. 10. The center point of the cleaning unit traces diagonal line DL down and to the right as shown at the end of the sequence shown in FIG. 10. FIG. 11 shows an example embodiment where there is a 180 degree phase angle shift between tapping and sweeping motions. Starting at the beginning of the cycle there is no change in amplitude for either motion and, thereafter, the cleaning elements can be driven in the tapping motion to a positive maximum equal to an amplitude of 2 mm. Simultaneously, the cleaning elements can be rotated in a sweeping motion to a negative maximum equal to a rotational amplitude of -6 degrees. Thus, at 90 degrees of the cycle, there is maximum tapping translation and a maximum rotation in the counter-clockwise direction for the cleaning elements. At half of the cycle, there is no change in amplitude again for either motion. Thereafter, the cleaning elements can be driven in the tapping motion to a negative maximum equal to an amplitude of -2 mm. Simultaneously, the cleaning elements can be rotated in a sweeping motion to a positive maximum equal to a rotational amplitude of +6 degrees. Thus, at 270 degrees of the cycle, there is a minimum tapping translation and a maximum rotation in the clockwise direction for the cleaning elements. At the end of the cycle, there is no change in amplitude again for either motion. At the same time as the reciprocating tapping motion, the cleaning elements can be driven to more than 5 degrees in the counter-clockwise direction and then back to neutral in the clockwise direction and, further in the clockwise direction to more than 5 degrees. The cleaning elements can be driven back to neutral in the clockwise direction. FIG. 12 shows another embodiment where the cleaning elements are driven to produce two taps (i.e., points of maximum tapping translation) during a single sweeping cycle. FIG. 13 shows another embodiment where the cleaning elements are driven to produce four taps (i.e., points of maximum tapping translation) during a single sweeping cycle.

In FIG. 14, the tapping motion starts at point A and the sweeping motion starts at point B. The frequency of the tapping motion is three times lower than the frequency of the sweeping motion and the tapping motion is approximately 90 degrees out-of-phase with the sweeping motion. Thus, the frequency ratio of the sweeping to tapping motions is 3:1. Of course, in other embodiments, the sweeping motion starts out ahead of the tapping motion, but the frequency of the tapping motion is still three times lower than the frequency of the sweeping motion and the tapping motion is approximately 90 degrees out-of-phase with the sweeping motion. In embodiments as shown in FIG. 14, the tapping and sweeping motions can have equal amplitudes yet, it should be appreciated that the motions can have different amplitudes in different embodiments.

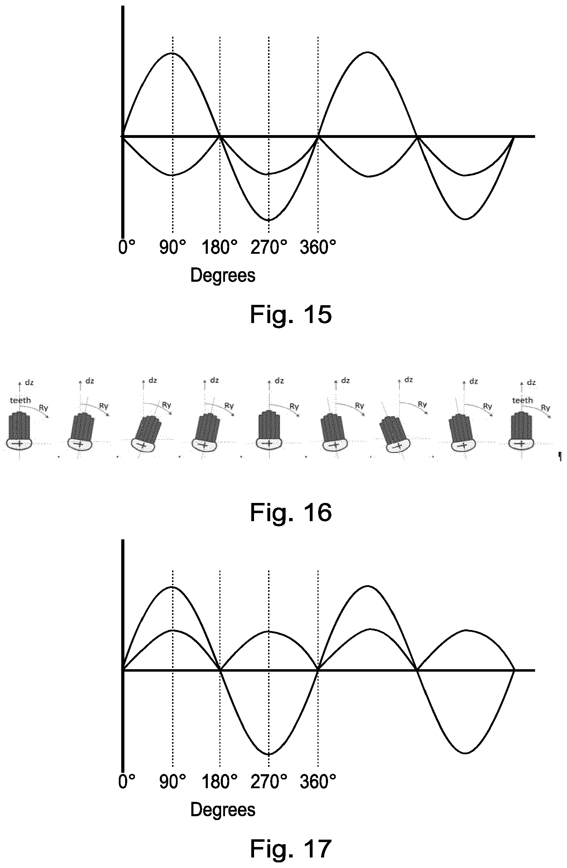

In FIG. 15, the tapping motion is coupled with the sweeping motion in a "down-tap-down-tap" motion. The tapping frequency is faster than the sweeping frequency. More specifically, the tapping frequency is twice as fast as the sweeping frequency. FIG. 16 shows an end view of a cleaning unit, the center of which traces the shape of a three-dimensional cone when the tapping frequency is twice as fast as the sweeping frequency as shown in FIG. 15. In such embodiments, the maximum tapping occurs while the bristles are pointing directly to the oral surface, thus delivering a high impact force since cantilever beams have higher compressive stiffness than bending stiffness. As the cleaning elements trace a three-dimensional cone in the air, the cleaning elements have a smaller impact zone.

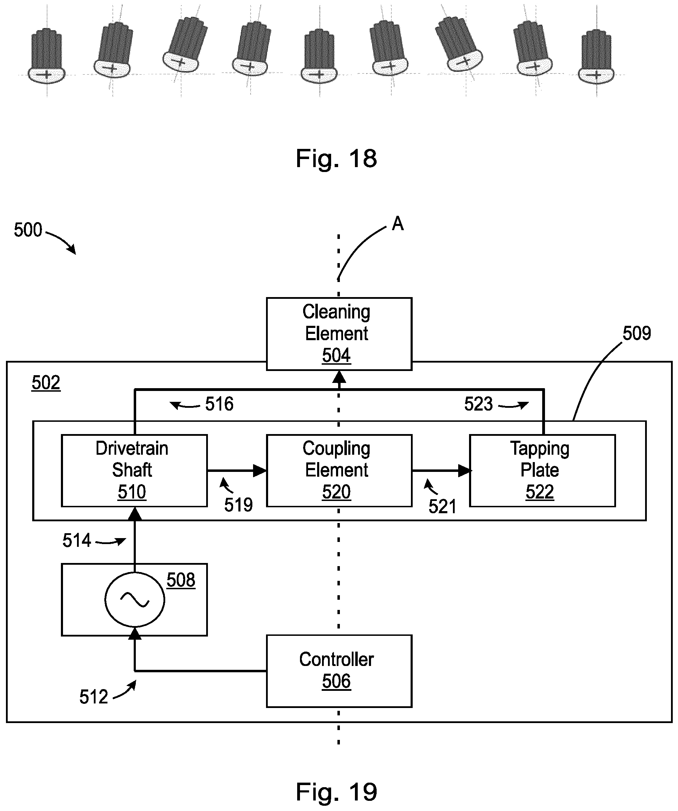

In FIG. 17, the tapping motion is coupled with the sweeping motion in a "up-up" motion, where the tapping frequency is twice as fast as the sweeping frequency. FIG. 18 shows an end view of a cleaning unit, the center of which traces a V-shaped motion when the tapping motion is coupled with the sweeping motion in a "up-up" motion. In such embodiments, the motion maximizes the chances that cleaning elements contact an oral surface, since the maximum tapping translation occurs at the maximum rotational angle similar to the embodiment discussed above with reference to FIGS. 5 and 6. However, in such embodiments, the cleaning elements also contact in a bending scenario, which tends to minimize peak forces. While the peak forces can be minimized, such motion can be used to soften a tapping effect where desired.

Since users do not have a good idea of where to position the cleaning unit in the mouth when cleaning, instead of focusing on user placement, the previously described motions can be used to get robust cleaning by position independent variable motion. For example, by utilizing several of the previously described motions together, the user can achieve desirable cleaning performance based on the motions of the cleaning unit and/or cleaning elements regardless of where the user positions the unit in the mouth. Thus, a user is not required to place the product in the correct spot with the correct mode. Instead of consistently implementing the same cleaning behavior cycle to cycle during a cleaning routine, the cleaning behavior can change over time during the cleaning routine to achieve the position independent variable motion. When the cleaning behavior remains the same during a routine and doesn't change, some of the coupled sweeps and taps may be more effective than others. When the cleaning behavior changes over time, then new areas are cleaned during the routine. In embodiments, the device can include sensor 140 using a stimulus to change the mode of the device, i.e., from gumline mode to interproximal mode. In other embodiments, the device can achieve the dynamic cleaning behavior passively.

One passive technique for achieving the dynamic cleaning behavior involves naturally switching between two behaviors quickly. For example, if the "down-tap-down-tap" motion referred to herein with reference to FIGS. 15 and 16 is a precision motion ideal for interproximal spaces, and the "up-up" motion referred to herein with reference to FIGS. 17 and 18 is better for large surfaces, the user is more likely to have the optimal mode at the optimal spot for at least some duration of the cleaning routine when the device quickly switches between both motions. When considering an average of 32 teeth for a user and that a recommended oral care routine lasts for 2 minutes, there is approximately 3.75 seconds per tooth available during the recommended oral care routine. By not switching between two or more motions, the user is likely to use a non-optimal mode to clean an area (e.g., the "up-up" motion for interproximal spaces or the "down-tap-down-tap" motion for large surfaces). In embodiments, the device can quickly switch between at least two motions during an oral care routine so that the user experiences both motions for the teeth surfaces and interproximal spaces.

To achieve the two motions in an example embodiment, the frequencies of the sweeping and tapping motions can be close to each other, but not identical to each other. With reference to FIGS. 15 and 16 which show the "down-tap-down-tap" motion and FIGS. 17 and 18 which show the "up-up" motion, by shifting the frequency of the tapping motion relative to the frequency of the sweeping motion the resultant effect is a "beating" effect. The "beating" effect comprises a behavior where the tapping and sweeping motions become in-phase and out-of-phase over time. Thus, at times the maximum tapping occurs while the cleaning elements are pointing directly to the oral surface (e.g., as shown in the "down-tap-down-tap" configuration shown in FIGS. 15 and 16) and, at other times the maximum tapping translation occurs at the maximum rotational angle (e.g., as shown in the "up-up" configuration shown in FIGS. 17 and 18). When the "beating" occurs at least several times per second, then the multi-cleaning behavior occurs faster than a user moves the product, and thus an optimal mode would be used per tooth area.

Another passive technique for achieving the dynamic cleaning behavior involves harmonic intervals. In embodiments employing harmonic intervals, the resultant cleaning behavior would repeat in multiples of an integer. For cleaning behavior, the movement would vary periodically by the harmonic interval that is chosen.

Referring to FIG. 19, in one embodiment, a schematic personal care device 500 for simultaneously generating periodic rotational and periodic linear movements is provided where the frequency of the tapping motion is lower than the frequency of the sweeping motion and the tapping motion is out-of-phase with the sweeping motion. Of course, it should be appreciated that the controller of personal care device 500 can change the frequency and phase differences between the tapping and sweeping motions. The embodiment depicted in FIG. 19 should not be limited to ones where the frequency of the tapping motion is lower than the frequency of the sweeping motion. Personal care device 500 broadly includes a device housing or body portion 502, a cleaning unit 504, a controller 506, and a drivetrain assembly comprising an actuator 508 and a mechanical actuator system 509. Body portion 502 is akin to body portion 102 in FIG. 4. Cleaning unit 504 is akin to cleaning unit 104 which is movable relative to body portion 102. Thus, cleaning unit 504 is moveably mounted to body portion 502. Additionally, cleaning unit 504 comprises a set of cleaning elements or bristles where the cleaning elements extend from the platen in one or more directions. Controller 506 is akin to controller 130 and is within body portion 502. Controller 506 is configured to control actuator 508 of the drivetrain assembly to generate periodic rotational movement. The rotational movement generated by actuator 508 is transmitted to drivetrain shaft 510 of mechanical actuator system 509. Drivetrain shaft 510 transmits the periodic rotational movement to the cleaning unit and cleaning elements such that the set of cleaning elements move in a first direction about the central axis A or along a line that is tangential to the cleaning unit platen in a first movement pattern (i.e., a sweeping motion SM). The controller 506 is configured to transmit control signal 512 to actuator 508 to control the first movement pattern about the central axis or along a line that is tangential to the cleaning unit platen.

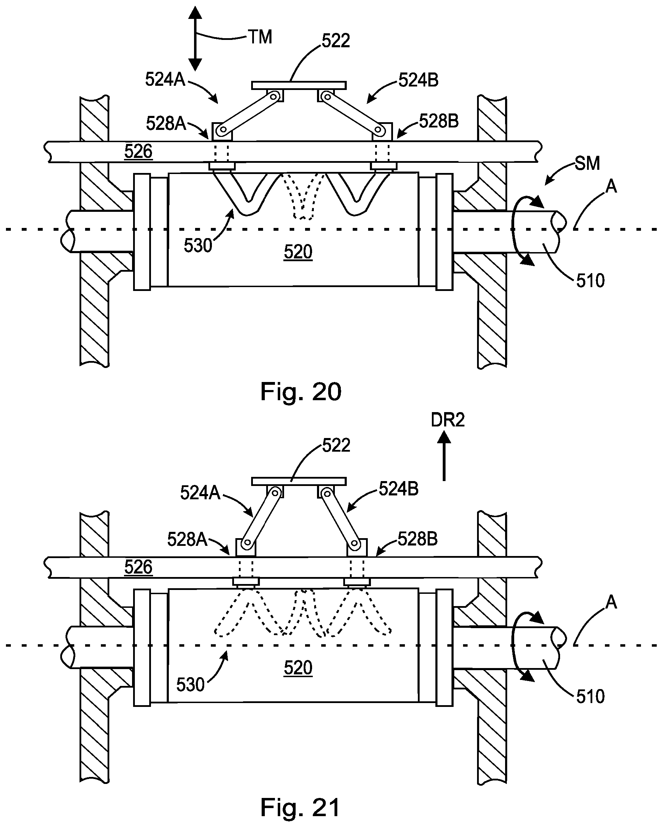

To produce the out-of-phase tapping motion TM, cleaning device 500 further comprises coupling element 520 and tapping plate 522 within mechanical actuator system 509. The coupling element 520 and the tapping plate 522 in combination with the drivetrain shaft 510 make up mechanical actuator system 509 that produces the sweeping and tapping motions from only a single drivetrain actuator, namely, actuator 508. In embodiments, the single actuator that generates the sweeping and tapping motions is a sweeping motion actuator, such as a sweeping drivetrain shaft. For example, controller 506 can be configured to transmit control signal 512 to actuator 508, which in turn can transmit an electrical signal or drivetrain signal 514 that causes drivetrain shaft 510 to rotate about central axis A or along a line that is tangential to the cleaning unit platen via any suitable mechanical coupling 516. Coupling element 520 and tapping plate 522 use the sweeping motion from drivetrain shaft 510 of mechanical actuator system 509 and mechanically converts the sweeping movement with inherent, tapping-inducing components as further shown and described with reference to FIGS. 20 and 21. Thus, cleaning device can use a single control signal 512 to control both the sweeping and tapping motions of the cleaning unit 504. Coupling element 520 is mechanically coupled with the drivetrain shaft 510 by any suitable mechanical coupling 519. Similarly, tapping plate 522 is mechanically coupled with the coupling element 520 by any suitable mechanical coupling 521. The tapping plate is mechanically coupled with cleaning unit 504 by any suitable mechanical coupling 523.

One example embodiment of coupling element 520 and tapping plate 522 is shown in FIGS. 20 and 21. Controller 506 controls actuator 508 to generate sweeping movement within drivetrain shaft 510. By oscillating the sweeping drivetrain shaft 510 and coupling element 520 and generating the sweeping motion SM, the tapping plate 522 is activated as well. Tapping plate 522 can be connected via joints 524A, 524B, which can slide over fixed sliding shaft 526. Joints 524A and 524B slide over shaft 526 via sliders 528A, 528B which must follow the profile in the shape slider or coupling element 520. As shown in FIG. 20, coupling element 520 is mounted on drivetrain shaft 510 to rotate with shaft 510. Coupling element 520 comprises a profile 530 in an outer circumferential surface of coupling element 520. Profile 530 comprises any suitable specific tapping-inducing element(s) (e.g., V-shaped grooves) to interact with sliders 528A and 528B. The frequency and phase can be controlled by the shape of the V-shaped grooves. For example, different shapes (e.g., engravings, linearly increasing/decreasing translation of grooves, and/or spacing between the grooves) result in different frequencies and/or phases.

Starting from the position of sliders 528A and 528B and joints 524A and 524B shown in FIG. 20 and moving to the position of sliders 528A and 528B and joints 524A and 524B in FIG. 21, as coupling element 520 rotates with drivetrain shaft 510 about central axis A in a first direction sliders 528A and 528B are pulled toward each other along the V-shaped grooves in profile 530. When sliders 528A and 528B move toward each other, the proximal ends of joints 524A and 524B are also pulled toward each other. As shown in FIG. 21, when the proximal ends of joints 524A and 524B are pulled toward each other, tapping plate 522 is pushed upward in vertical direction DR2. The tapping plate 522 can be pushed further in direction DR2 by pulling the proximal ends of joints 524A and 524B toward each other further along profile 530. Similarly, tapping plate 522 can be pushed in the opposite direction (i.e., direction DR1) by pushing the proximal ends of joints 524A and 524B away from each other within the V-shaped grooves of profile 530.

In an embodiment, the tapping plate 522 is connected to a bearing or any suitable alternative on the drivetrain shaft 510. Thus, when the tapping plate 522 moves in direction DR2, the drivetrain assembly also moves in direction DR2. Similarly, when the tapping plate 522 moves in direction DR1, opposite direction DR2, the drivetrain assembly also moves in direction DR1.

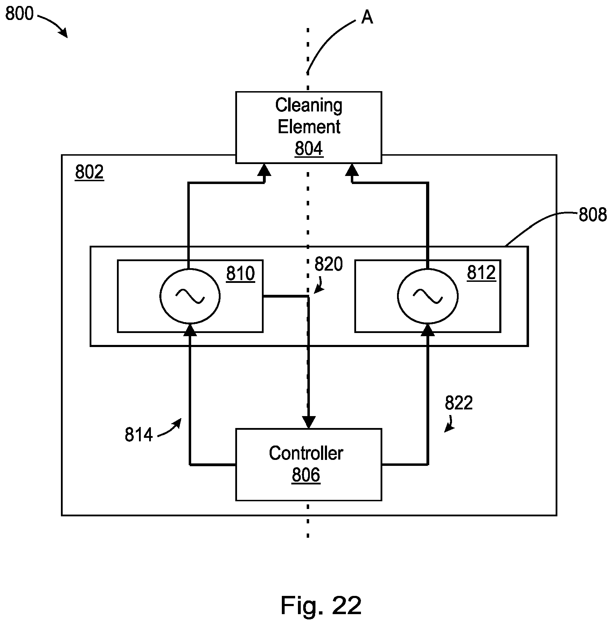

Referring to FIG. 22, in one embodiment, a schematic personal care device 800 for simultaneously generating periodic movements is provided where the frequency of the tapping motion is lower than the frequency of the sweeping motion and the tapping motion is out-of-phase with the sweeping motion. Personal care device 800 broadly comprises a device housing or body portion 802, a cleaning unit 804, a controller 806, and a mechanical actuator system 808 comprising two actuators, namely, first actuator 810 and second actuator 812. Body portion 802 is akin to portions 102 and 502. Cleaning unit 804 is akin to units 104 and 504. Thus, cleaning unit 804 is moveably mounted on body portion 802. Additionally, cleaning unit 804 comprises a set of cleaning elements where the cleaning elements extend from the unit in one or more directions. Controller 806 is akin to controllers 506 and 130 and is within body portion 802.

Controller 806 is configured to control actuator 810 of the mechanical actuator system 808 to generate periodic sweeping movement for cleaning unit 804. The sweeping movement generated by actuator 810 is transmitted to cleaning unit 804 by a drivetrain shaft. The drivetrain shaft transmits periodic sweeping movement generated by actuator 810 to the cleaning unit and cleaning elements such that at least some cleaning elements move in a first direction about the central axis A or along a line that is tangential to the cleaning unit platen in a first movement pattern (i.e., a sweeping motion SM). The controller 806 is configured to transmit control signal 814 to actuator 810 to control the first movement pattern about the central axis A or along a line that is tangential to the cleaning unit platen.

To produce the tapping motion TM, cleaning device 800 further comprises a second actuator 812 (e.g., a vibrator or tapping plate with a sliding shaft). Instead of the mechanical activation discussed above with reference to cleaning device 500, in FIG. 22, a drivetrain signal 820 of the first actuator 810 can trigger an activation signal 822 for the second actuator 812. Drivetrain signal 820 can also constitute a motion de-synchronization control signal of second actuator 812. In other words, the combined sweeping and tapping motions are achieved by using a motion frequency and phase (de) synchronization driving scheme, in which the drivetrain/brushing motion signal (e.g., signal 820) of the sweeping shaft of the first actuator 810 is used as a trigger and control signal to control the motion characteristics of the second actuator 812. Thus, a sliding shaft of a tapping plate or an eccentric rotating mass vibration motor can be electrically controlled to drive the tapping motion separate from the sweeping motion.

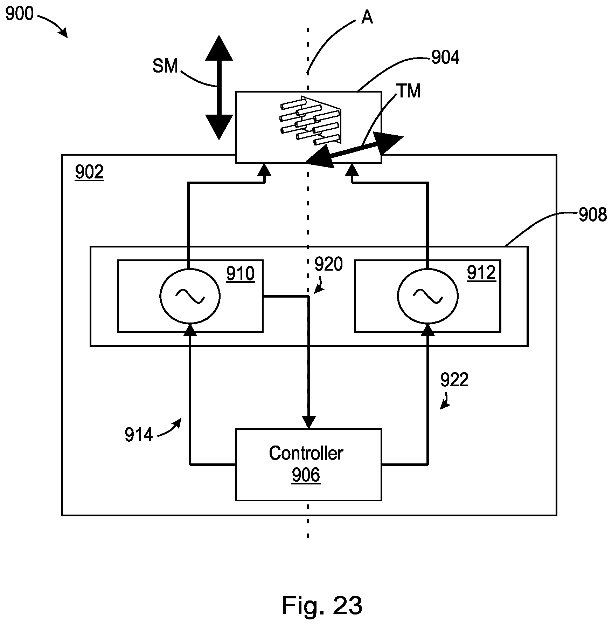

One example embodiment of an oral care device having a mechanical actuator system comprising two actuators is shown in FIG. 23. Elements 902, 904, 906, 910, and 912 are akin to or equivalents of elements 802, 804, 806, 810, and 812 in FIG. 22. A two-dimensional motion or summation comprising sweeping and tapping motions can be generated by mechanical actuator system 908 comprising first and second actuators 910 and 912. The sweeping and tapping motions are independent or decoupled from each other. In an embodiment, actuator 910 comprises a drivetrain assembly configured to generate an oscillating sweeping motion. In embodiments, actuator 910 comprises a drivetrain shaft to transmit oscillating sweeping motion to the cleaning unit 904. Actuator 912 can comprise a vibration motor (e.g., an eccentric rotating mass (ERM) vibration motor or a linear resonant actuator (LRA) vibration motor available from Precision Microdrives of the United Kingdom etc.) or any suitable alternative.

During a care routine, controller 906 can transmit control signal 914 to actuator 910 to control a sweeping motion about the central axis A of the device or along a line that is tangential to the cleaning unit platen. Actuator 910 transmits an electrical signal or drivetrain signal 920 and the controller 906 uses the drivetrain signal 920 from actuator 910 to generate a control signal 922 to produce a required frequency and complementary phase-difference of the second motion for the second actuator 912. In other words, signal 920 triggers activation and de-synchronization of the motion generated from second actuator 912 relative to the motion generated from first actuator 910. In an embodiment, the first actuator 910 generates a sweeping motion SM such that the cleaning elements of cleaning unit 904 move in a direction that is tangential to the direction that the bristles are facing. The tangential direction can be along a direction parallel to central axis A or about central axis A, for example. The second actuator 912 generates the tapping motion TM such that the cleaning elements move along a z-axis of the device at an amplitude of at least 0.25 mm or normal to the cleaning unit platen. The frequency of the tapping motion can be three times lower than the frequency of the sweeping motion in embodiments. In other words, if the sweeping motion SM has a frequency equal to fₛ, then the tapping motion TM has a frequency equal to fₜ = fₛ/3 in embodiments. In such embodiments, the frequency ratio of the sweeping to tapping motions is 3:1.

Generating the tapping motion TM at a lower frequency than the sweeping motion SM can be used for purposes other than optimizing cleaning performance. For example, when the tapping motion is generated every 2-4 seconds, the tapping motion TM can serve as a perceptual toothpacer. Each time the cleaning unit and/or cleaning elements are pushed down, pulsed, or tapped, the user is notified to move the cleaning unit to the next space in the mouth.

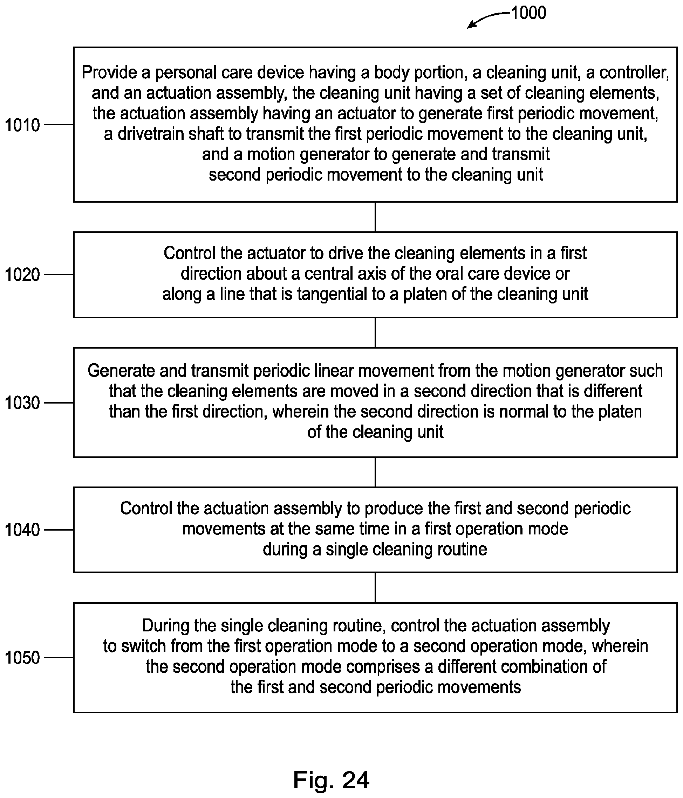

FIG. 24 depicts a flowchart illustrating a method 1000 of operating a personal care device according to an exemplary embodiment where the device controllably produces the sweeping and tapping motions in a non-synchronized manner. In other words, the device controllably produces a sweeping motion and a tapping motion where the motions operate at different frequencies and/or out-of-phase with each other.

The method begins at step 1010, where a personal care device is provided. The personal care device includes a body portion, a cleaning unit, a controller, and an actuation assembly as described or otherwise contemplated herein. The cleaning unit comprises a set of cleaning elements extending from the platen along an axis of alignment or an axis normal to the cleaning unit platen. The actuation assembly comprises an actuator configured to generate periodic sweeping movement about a central axis of the device or along a line that is tangential to the cleaning unit platen and a drivetrain shaft configured to transmit the periodic movement to the cleaning unit. The actuation assembly also comprises a motion generator configured to generate and transmit periodic linear movement to the cleaning unit and/or cleaning elements. The cleaning unit is configured to move in first and second movement patterns that are different and at least partially overlapping due to the transmitted periodic movements. The first and second movement patterns operate at different frequencies and/or out-of-phase with each other as described or otherwise contemplated herein.

At step 1020, the controller controls the actuator and drivetrain shaft of the actuation assembly to drive the cleaning elements in the first movement pattern where the first movement pattern comprises a first direction about the central axis of the device or along a line that is tangential to the cleaning unit platen. The first movement pattern can embody any of the graphical representations of the sweeping motion described herein, but should not be limited to only those described or otherwise depicted. Any suitable actuator can oscillate the sweeping shaft about central axis A or along a line that is tangential to the cleaning unit platen.

At step 1030, the motion generator produces periodic linear movement and the drivetrain shaft of the actuation assembly transmits such linear movement to the cleaning unit. The cleaning elements are driven in the second movement pattern where the second movement pattern comprises a second direction that is different than the first direction. The second direction refers to a direction along a z-axis of the personal care device or along a direction parallel to at least some of the cleaning elements. In other words, the second direction is normal to the cleaning unit platen (i.e., perpendicular to the cleaning unit platen or perpendicular to the central axis of the device). The second movement pattern can embody any of the graphical representations of the tapping motion described herein, but should not be limited to only those described or otherwise depicted. In embodiments, the motion generator comprises a coupling element and a tapping plate to generate the periodic linear movement. The tapping inducing elements of the coupling element are configured to generate frequency and/or phase differences between the sweeping and tapping motions. In alternate embodiments, the frequency and/or phase differences between the sweeping and tapping motions are generated by a controller and a tapping actuator based on a signal from the sweeping actuator.

At step 1040, the controller controls the actuation assembly to produce the first and second periodic movements at the same time in a first operation mode (e.g., a gumline mode, an interproximal mode, or an overall mode) during a single cleaning routine.

At step 1050, during the single cleaning routine, the controller controls the actuation assembly to switch from the first operation mode to a second operation mode. Like the first operation mode that comprises a combination of the first and second periodic movements to target a particular area of the user's mouth, the second operation mode also comprises a combination of the first and second periodic movements, yet the combination is different to target a different area of the user's mouth. Thus, if the first operation mode is a gumline mode, the second operation mode can be an interproximal mode or an overall mode or vice versa, for example. In embodiments, the switch between the first and second operation modes can be a natural dynamic one without regard to a position of the personal care device or the cleaning unit. In other embodiments, the switch between the first and second operation modes can be based on a position of the device or cleaning unit or a time since the user started the cleaning routine. The switch between the first and second operation modes can also be based on a stimulus from a sensor within the device to change the mode.

The operational effect of the powered personal care devices described herein is that they can provide improved cleaning performance at critical areas of the mouth by driving cleaning elements in a vertical periodic motion that is parallel to an axis of alignment of the cleaning elements, where the amplitude of the vertical motion is equal to or greater than 0.25 mm (i.e., power tapping). The inventive power tapping motion within powered personal care devices can: (i) achieve deeper reach in gum pockets to remove subgingival plaque, (ii) achieve higher peak forces at surfaces which improve plaque and/or stain removal, (iii) prevent pinning of bristle tufts which improves plaque removal by restoring beneficial tuft sweeping behavior, (iv) achieve more resilience to variables of use like device placement, device angle, and device pressure, and (v) provide new options for experiential modes for the consumer.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A personal care device (100), comprising:
a body portion (102);
a cleaning unit (104) having a set of cleaning elements (116);
a controller (130) arranged within the body portion; and
an actuator assembly (122) arranged to be driven by the controller, the actuator assembly comprising an actuator (508, 810) configured to generate first and second periodic movements of the cleaning unit, wherein the first and second periodic movements operate at different frequencies and/or out-of-phase with each other;
wherein the first periodic movement is transmitted to the cleaning unit such that at least one cleaning element of the set of cleaning elements moves in a first direction about a central axis of the personal care device or along a line that is tangential to a platen of the cleaning unit;
wherein the second periodic movement is transmitted to the cleaning unit such that at least one cleaning element of the set of cleaning elements moves in a second direction that is different than the first direction, wherein the second direction is normal to the platen of the cleaning unit;
wherein the set of cleaning elements are configured to move according to the first periodic movement at a first frequency and the set of cleaning elements are configured to move according to the second periodic movement at a second frequency that is different than the first frequency; and
wherein the first frequency is higher than the second frequency.

2. The personal care device of claim 1, wherein the second frequency is approximately three times lower than the first frequency.

3. The personal care device of claim 1, wherein the second frequency is approximately two times higher than the first frequency.

4. The personal care device of claim 1, wherein the first and second periodic movements are phase shifted from each other by approximately 90 degrees or 270 degrees.

5. The personal care device of claim 1, wherein the first and second periodic movements are phase shifted from each other by approximately 180 degrees.

6. A personal care device (100), comprising:
a body portion (102);
a cleaning unit (104) having a set of cleaning elements (116); and
an actuation assembly (509, 808) configured to drive the cleaning unit, wherein the actuation assembly is arranged within the body portion and comprises:
a drivetrain (510) configured to periodically move the set of cleaning elements in a first periodic movement such that at least one cleaning element of the set of cleaning elements moves in a first direction about a central axis (A) of the personal care device or along a line that is tangential to a platen of the cleaning unit; and
a motion generator (520, 522, 812) configured to move the set of cleaning elements in a second periodic movement such that at least one cleaning element of the set of cleaning elements moves in a second direction that is different than the first direction, wherein the second direction is normal to the platen of the cleaning unit;
wherein the set of cleaning elements are configured to move according to the first periodic movement at a first frequency and the set of cleaning elements are configured to move according to the second periodic movement at a second frequency that is different than the first frequency; and
wherein the first frequency is higher than the second frequency.

7. The personal care device of claim 6, wherein the second direction is parallel to an axis of alignment of the cleaning elements.

8. The personal care device of claim 6, wherein the first and second periodic movements are phase shifted from each other by approximately 90 degrees, approximately 180 degrees, or approximately 270 degrees.

9. The personal care device of claim 6, wherein the motion generator comprises:
a motion conversion element (520) coupled with the drivetrain (510); and
a tapping plate (522) configured to be activated by moving the drivetrain (510), wherein the tapping plate is configured to move the set of cleaning elements in the second periodic movement.

10. The personal care device of claim 6, wherein the drivetrain comprises a first actuator (810) and the motion generator comprises a second actuator (812) configured to move the set of cleaning elements in the second periodic movement.

11. The personal care device of claim 10, further comprising:
a controller (506, 806) configured to control the actuation assembly, wherein the controller is configured to:
receive an input signal from the first actuator; and
control the second actuator based on the received input signal from the first actuator.

12. The personal care device of claim 11, wherein the controller is configured to generate a frequency and phase difference of the second periodic movement relative to the first periodic movement based on the received input signal.

## Patentansprüche

1. Körperpflegevorrichtung (100), umfassend:
einen Körperabschnitt (102);
eine Reinigungseinheit (104), die einen Satz von Reinigungselementen (116) aufweist;
eine Steuereinheit (130), die innerhalb des Körperabschnitts angeordnet ist; und
eine Betätigungsanordnung (122), die dazu angeordnet ist, von der Steuereinheit angetrieben zu werden, wobei die Betätigungsanordnung eine Betätigungsvorrichtung (508, 810) umfasst, die dazu konfiguriert ist, eine erste und eine zweite periodische Bewegung der Reinigungseinheit zu erzeugen, wobei die erste und die zweite periodische Bewegung mit unterschiedlichen Frequenzen arbeiten und/oder phasenverschoben zueinander sind;
wobei die erste periodische Bewegung so auf die Reinigungseinheit übertragen wird, dass sich mindestens ein Reinigungselement des Satzes von Reinigungselementen in einer ersten Richtung um eine Mittelachse der Körperpflegevorrichtung oder entlang einer Linie, die tangential zu einer Trägerplatte der Reinigungseinheit ist, bewegt;
wobei die zweite periodische Bewegung so auf die Reinigungseinheit übertragen wird, dass sich mindestens ein Reinigungselement des Satzes von Reinigungselementen in einer zweiten Richtung bewegt, die sich von der ersten Richtung unterscheidet, wobei die zweite Richtung normal zur Trägerplatte der Reinigungseinheit ist;
wobei der Satz von Reinigungselementen dazu konfiguriert ist, sich entsprechend der ersten periodischen Bewegung mit einer ersten Frequenz zu bewegen, und der Satz von Reinigungselementen dazu konfiguriert ist, sich entsprechend der zweiten periodischen Bewegung mit einer zweiten Frequenz zu bewegen, die sich von der ersten Frequenz unterscheidet; und
wobei die zweite Frequenz höher ist als die erste Frequenz.

2. Körperpflegevorrichtung nach Anspruch 1, wobei die zweite Frequenz ungefähr dreimal niedriger ist als die erste Frequenz.

3. Körperpflegevorrichtung nach Anspruch 1, wobei die zweite Frequenz ungefähr zweimal höher ist als die erste Frequenz.

4. Körperpflegevorrichtung nach Anspruch 1, wobei die erste und die zweite periodische Bewegung um ungefähr 90 Grad oder 270 Grad zueinander phasenverschoben sind.

5. Körperpflegevorrichtung nach Anspruch 1, wobei die erste und die zweite periodische Bewegung um ungefähr 180 Grad zueinander phasenverschoben sind.

6. Körperpflegevorrichtung (100), umfassend:
einen Körperabschnitt (102);
eine Reinigungseinheit (104), die einen Satz von Reinigungselementen (116) aufweist; und
eine Betätigungsanordnung (509, 808), die dazu konfiguriert ist, die Reinigungseinheit zu steuern, wobei die Betätigungsanordnung innerhalb des Körperabschnitts angeordnet ist und umfasst:
einen Antriebsstrang (510), der dazu konfiguriert ist, den Satz von Reinigungselementen in einer ersten periodischen Bewegung so periodisch zu bewegen, dass sich mindestens ein Reinigungselement des Satzes von Reinigungselementen in einer ersten Richtung um eine Mittelachse (A) der Körperpflegevorrichtung oder entlang einer Linie, die tangential zu einer Trägerplatte der Reinigungseinheit ist, bewegt; und
einen Bewegungsgenerator (520, 522, 812), der dazu konfiguriert ist, den Satz von Reinigungselementen in einer zweiten periodischen Bewegung so zu bewegen, dass sich mindestens ein Reinigungselement des Satzes von Reinigungselementen in einer zweiten Richtung bewegt, die sich von der ersten Richtung unterscheidet, wobei die zweite Richtung normal zur Trägerplatte der Reinigungseinheit ist;
wobei der Satz von Reinigungselementen dazu konfiguriert ist, sich entsprechend der ersten periodischen Bewegung mit einer ersten Frequenz zu bewegen, und der Satz von Reinigungselementen dazu konfiguriert ist, sich entsprechend der zweiten periodischen Bewegung mit einer zweiten Frequenz zu bewegen, die sich von der ersten Frequenz unterscheidet; und
wobei die zweite Frequenz höher ist als die erste Frequenz.

7. Körperpflegevorrichtung nach Anspruch 6, wobei die zweite Richtung parallel zu einer Ausrichtungsachse der Reinigungselemente ist.

8. Körperpflegevorrichtung nach Anspruch 6, wobei die erste und die zweite periodische Bewegung um ungefähr 90 Grad, ungefähr 180 Grad oder ungefähr 270 Grad zueinander phasenverschoben sind.

9. Körperpflegevorrichtung nach Anspruch 6, wobei der Bewegungsgenerator umfasst:
ein Bewegungsumwandlungselement (520), das mit dem Antriebsstrang (510) gekoppelt ist; und
eine Klopfplatte (522), die dazu konfiguriert ist, durch Bewegen des Antriebsstrangs (510) aktiviert zu werden, wobei die Klopfplatte dazu konfiguriert ist, den Satz von Reinigungselementen in der zweiten periodischen Bewegung zu bewegen.

10. Körperpflegevorrichtung nach Anspruch 6, wobei der Antriebsstrang eine erste Betätigungsvorrichtung (810) umfasst und der Bewegungsgenerator eine zweite Betätigungsvorrichtung (812) umfasst, die dazu konfiguriert sind, den Satz von Reinigungselementen in der zweiten periodischen Bewegung zu bewegen.

11. Körperpflegevorrichtung nach Anspruch 10, weiter umfassend:
eine Steuereinheit (506, 806), die dazu konfiguriert ist, die Betätigungsanordnung zu steuern, wobei die Steuereinheit dazu konfiguriert ist:
ein Eingangssignal von der ersten Betätigungsvorrichtung zu empfangen; und
die zweite Betätigungsvorrichtung, basierend auf dem empfangenen Eingangssignal vom ersten Aktuator zu steuern.

12. Körperpflegevorrichtung nach Anspruch 11, wobei die Steuereinheit dazu konfiguriert ist, basierend auf dem empfangenen Eingangssignal eine Frequenz- und Phasendifferenz der zweiten periodischen Bewegung relativ zur ersten periodischen Bewegung zu erzeugen.

## Revendications

1. Dispositif de soins personnels (100), comprenant :
une partie corps (102) ;
une unité de nettoyage (104) présentant un ensemble d'éléments de nettoyage (116) ;
un dispositif de commande (130) agencé à l'intérieur de la partie corps ; et
un ensemble actionneur (122) agencé pour être entraîné par le dispositif de commande, l'ensemble actionneur comprenant un actionneur (508, 810) configuré pour générer des premier et second mouvements périodiques de l'unité de nettoyage, dans lequel les premier et second mouvements périodiques fonctionnent à des fréquences différentes et/ou déphasés l'un par rapport à l'autre ;
dans lequel le premier mouvement périodique est transmis à l'unité de nettoyage de telle sorte qu'au moins un élément de nettoyage de l'ensemble d'éléments de nettoyage se déplace dans une première direction autour d'un axe central du dispositif de soins personnels ou le long d'une ligne tangentielle à un plateau de l'unité de nettoyage ;
dans lequel le second mouvement périodique est transmis à l'unité de nettoyage de telle sorte qu'au moins un élément de nettoyage de l'ensemble d'éléments de nettoyage se déplace dans une seconde direction qui est différente de la première direction, dans lequel la seconde direction est normale au plateau de l'unité de nettoyage ;
dans lequel l'ensemble d'éléments de nettoyage est configuré pour se déplacer selon le premier mouvement périodique à une première fréquence et l'ensemble d'éléments de nettoyage est configuré pour se déplacer selon le second mouvement périodique à une seconde fréquence qui est différente de la première fréquence ; et
dans lequel la première fréquence est supérieure à la seconde fréquence.

2. Dispositif de soins personnels selon la revendication 1, dans lequel la seconde fréquence est environ trois fois plus basse que la première fréquence.

3. Dispositif de soins personnels selon la revendication 1, dans lequel la seconde fréquence est environ deux fois plus élevée que la première fréquence.

4. Dispositif de soins personnels selon la revendication 1, dans lequel les premier et second mouvements périodiques sont déphasés l'un par rapport à l'autre d'environ 90 degrés ou 270 degrés.

5. Dispositif de soins personnels selon la revendication 1, dans lequel les premier et second mouvements périodiques sont déphasés l'un par rapport à l'autre d'environ 180 degrés.

6. Dispositif de soins personnels (100), comprenant :
une partie corps (102) ;
une unité de nettoyage (104) présentant un ensemble d'éléments de nettoyage (116) ; et
un ensemble d'actionnement (509, 808) configuré pour entraîner l'unité de nettoyage, dans lequel l'ensemble d'actionnement est agencé à l'intérieur de la partie corps et comprend :
une transmission (510) configurée pour déplacer périodiquement l'ensemble d'éléments de nettoyage dans un premier mouvement périodique de telle sorte qu'au moins un élément de nettoyage de l'ensemble d'éléments de nettoyage se déplace dans une première direction autour d'un axe central (A) du dispositif de soins personnels ou le long d'une ligne tangentielle à un plateau de l'unité de nettoyage ; et
un générateur de mouvement (520, 522, 812) configuré pour déplacer l'ensemble d'éléments de nettoyage dans un second mouvement périodique de telle sorte qu'au moins un élément de nettoyage de l'ensemble d'éléments de nettoyage se déplace dans une seconde direction qui est différente de la première direction, dans lequel la seconde direction est normale par rapport au plateau de l'unité de nettoyage ;
dans lequel l'ensemble d'éléments de nettoyage est configuré pour se déplacer selon le premier mouvement périodique à une première fréquence et l'ensemble d'éléments de nettoyage est configuré pour se déplacer selon le second mouvement périodique à une seconde fréquence qui est différente de la première fréquence ; et
dans lequel la première fréquence est supérieure à la seconde fréquence.

7. Dispositif de soins personnels selon la revendication 6, dans lequel la seconde direction est parallèle à un axe d'alignement des éléments de nettoyage.

8. Dispositif de soins personnels selon la revendication 6, dans lequel les premier et second mouvements périodiques sont déphasés l'un par rapport à l'autre d'environ 90 degrés, d'environ 180 degrés ou d'environ 270 degrés.

9. Dispositif de soins personnels selon la revendication 6, dans lequel le générateur de mouvement comprend :
un élément de conversion de mouvement (520) couplé à la transmission (510) ; et
une plaque taraudée (522) configurée pour être activée par le déplacement de la transmission (510), dans lequel la plaque taraudée est configurée pour déplacer l'ensemble d'éléments de nettoyage dans le second mouvement périodique.

10. Dispositif de soins personnels selon la revendication 6, dans lequel la transmission comprend un premier actionneur (810) et le générateur de mouvement comprend un second actionneur (812) configuré pour déplacer l'ensemble d'éléments de nettoyage dans le second mouvement périodique.

11. Dispositif de soins personnels selon la revendication 10, comprenant en outre :
un dispositif de commande (506, 806) configuré pour commander l'ensemble d'actionnement, dans lequel le dispositif de commande est configuré pour :
recevoir un signal d'entrée du premier actionneur ; et
commander le second actionneur sur la base du signal d'entrée reçu du premier actionneur.

12. Dispositif de soins personnels selon la revendication 11, dans lequel le dispositif de commande est configuré pour générer une différence de fréquence et de phase du second mouvement périodique par rapport au premier mouvement périodique sur la base du signal d'entrée reçu.
